# DEMANDE DE BREVET EUROPEEN

(11) **EP 0 742 514 A1**
(43) Date de publication de la demande: **13.11.1996**
(21) Numéro de dépôt: 96400527.6
(22) Date de dépôt: 14.03.1996
(51) Int. Cl.: G06F 9/44

(54) **Procédé de contrôle d'exécution d'un scénario de commande**

(30) Priorité: 12.05.1995 FR 9505637
(71) Demandeur: BULL S.A., 78430 Louveciennes (FR)
(72) Inventeur: Gobert, Daniel, 91380 Chilly Mazarin (FR); Sitbon, Gérard, 94400 Vitry (FR); Champeval, Didier, 78370 Plaisir (FR)
(74) Mandataire: Gouesmel, Daniel

(57) **Abrégé**

Procédé de contrôle de la prise en compte d'une demande d'exécution d'un scénario de commande (script) à travers un protocole non garanti (S.N.M.P.), dans un système (Si) informatique en réseau (RE) comprenant un gestionnaire (GE) et des agents (AG1) d'exécution des commandes, caractérisé en ce que :
1) le gestionnaire envoie d'abord, à l'agent chargé de l'exécuter, une demande de ticket par une commande (Get *mrsGetTK*) de type "get", et l'agent lui retourne (GetResponse) un ticket,
2) Le gestionnaire envoie ensuite la demande d'exécution à l'agent par une commande (Set *mrsExecute* cmd TK) de type "set", dont le ticket est un paramètre, puis l'agent contrôle sa validité et crée une instance d'exécution de la commande associée au ticket.
3) Le gestionnaire contrôle la bonne réception de la demande en scrutant (Get *mrsStatus*) l'instance par l'intermédiaire de l'agent.

Applicable aux systèmes informatiques hétérogènes.

## Description

La présente invention concerne un procédé de contrôle d'exécution d'un scénario de commande (communément appelé script dans la terminologie de l'homme du métier), plus spécifiquement adapté au protocole de gestion connu sous le nom de S.N.M.P. (sigle anglais de Simple Network Management Protocol). Ce dernier est né du besoin des utilisateurs d'avoir un protocole d'administration simple pour les systèmes informatiques comportant un ensemble de machines (plates-formes) distribuées en réseau. Il permet la communication entre un gestionnaire d'administration et des gestionnaires d'objets à gérer, appelés agents.

Ce protocole autorise trois actions qui sont : la récupération d'informations (appelée "get" ), le positionnement d'informations (appelée "set" ), et la remontée spontanée d'informations (appelée "trap" ). Il s'appuie sur des bases de données communes (Management Information Base, en anglais, en abrégé M.I.B.).

L'un des problèmes importants qui se posent à tout utilisateur d'un système informatique tel que celui mentionné plus haut est de pouvoir piloter, à intervalles réguliers, par l'intermédiaire de son administrateur chargé des opérations de gestion lourdes et complexes, l'ensemble des plates-formes qui le composent.

On considère donc une plate-forme centrale PL, sur laquelle tourne un administrateur ou gestionnaire GE, reliée par l'intermédiaire d'un réseau RE à une pluralité de plates-formes-cibles administrées par la première et désignées par PLC1, PLC2, etc.

PL et PLC1, PLC2, etc. forment le système informatique SI.

Le protocole de communication plus particulièrement utilisé entre PL et chacune de ces dernières est précisément S.N.M.P. Il est principalement utilisé pour gérer les objets décrits dans la M.I.B., installée dans PL mais il n'assure pas la fiabilité de l'exécution des commandes de type "set".

### LE PROBLEME POSE

En effet, lors de l'exécution d'un scénario de commande à travers une commande de type "set", plus communément appelée *snmpset,* il n'est actuellement pas possible de recevoir une confirmation de la bonne exécution de ce scénario.

II est ici rappelé que, dans la pratique courante, un scénario de commande est appelé "script". Il est composé d'un ensemble d'instructions à exécuter, chacune d'entre elles étant lancée par une commande.

L'invention consiste à suivre l'exécution du script en introduisant un protocole de contrôle au-dessus de S.N.M.P.

Ce protocole s'appuie sur une notion de ticket permettant d'identifier un script donné d'une façon unique.

L'invention s'applique pour tout protocole non garanti en mode non connecté. On rappelle que dans un réseau, le mode non connecté dit CLNS (sigle anglo-saxon de Connection less Network Service) s'appuie sur les services et protocoles de réseau définis par la norme ISO 8473 (l'ISO est un organisme international de normalisation et est le sigle anglo-saxon de International Standard Organization), laquelle inclut elle-même la norme ISO 9542 définissant les mécanismes et protocoles de routage associés.

### L'OBJET DE L'INVENTION

Selon l'invention, le procédé de contrôle de la prise en compte d'une demande d'exécution d'un scénario de commande (script) à travers un protocole non garanti en mode non-connecté (par exemple de type S.N.M.P.), dans un système informatique comprenant une pluralité de plates-formes hétérogènes reliées par un réseau supportant ce protocole, dont l'une dite plate-forme de commande comprend un gestionnaire d'administration et les autres comprennent des agents d'exécution des commandes, est caractérisé en ce qu'il est composé des phases suivantes :
A) Avant d'envoyer la demande d'exécution, le gestionnaire envoie, à l'agent de la plate-forme chargée de l'exécuter, une demande de ticket d'identification par l'intermédiaire d'une commande de type "get", et l'agent retourne un ticket d'identification au gestionnaire,
B) Le gestionnaire envoie la demande d'exécution de la commande à l'agent par l'intermédiaire d'une commande de type "set", pour laquelle le dit ticket est un paramètre, puis l'agent contrôle la validité de ce dernier et crée une instance d'exécution de la commande, instance qu'il associe au ticket.
C) Le gestionnaire s'assure de la bonne réception de la demande en scrutant la dite instance par l'intermédiaire de l'agent.
Dans une forme de réalisation préférée de l'invention, le procédé de contrôle est caractérisé en ce que, le protocole étant de type S.N.M.P., et les demandes d'exécution étant de type *snmpset* pour exécuter des scripts, il est composé des phases suivantes :
A) Avant d'envoyer la demande d'exécution du script, le gestionnaire envoie à l'agent de la plate-forme chargée de l'exécuter, la demande de ticket par l'intermédiaire d'une commande *snmpget,* et l'agent retourne le ticket au gestionnaire,
B) Le gestionnaire envoie la demande d'exécution du script à l'agent par l'intermédiaire d'une commande *snmpset,* pour laquelle le dit ticket est un paramètre, puis l'agent contrôle la validité du ticket et crée une instance d'exécution du script qu'il associe au ticket et lance l'exécution du script.
C) le gestionnaire effectue cette opération par le moyen de commandes *snmpget.*
D) Dès que l'exécution du script est terminée, le gestionnaire effectue une opération d'acquittement de celle-ci, en envoyant à l'agent une commande de type "set" avec une valeur d'acquittement appropriée.

D'autres caractéristiques et avantages de la présente invention apparaîtront dans la description suivante donnée à titre d'exemple non limitatif et en se référant aux dessins annexés. Sur ces dessins :

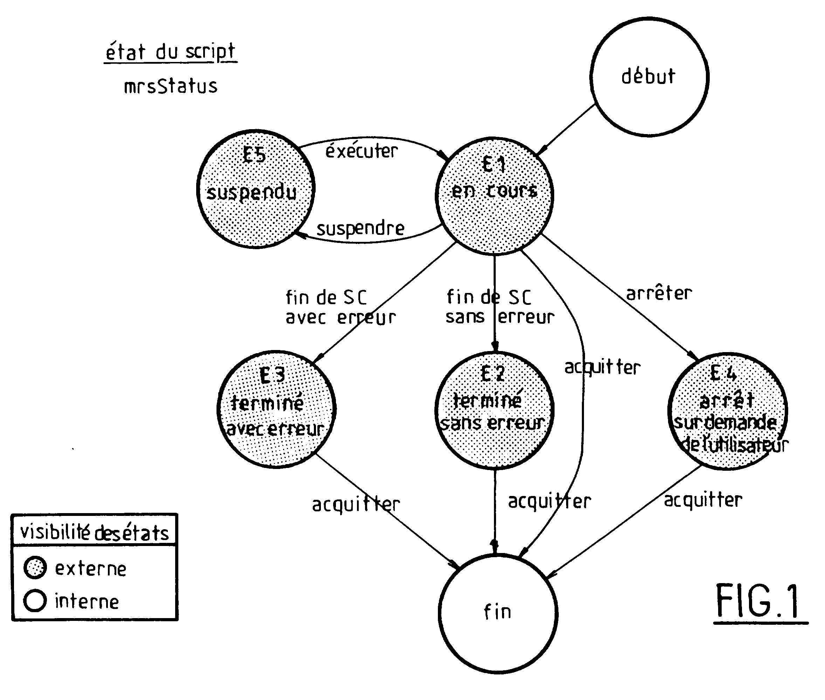

- la figure 1 montre le diagramme d'état du procédé selon l'invention,
- la figure 2 illustre les échanges entre le gestionnaire et l'agent,

### DESCRIPTION D'UN EXEMPLE DE REALISATION DE L'INVENTION

### 1) RAPPEL DU CONTEXTE :

On suppose que le gestionnaire GE tournant sur PL veut faire exécuter, à travers un protocole S.N.M.P., des scripts SC par l'agent AG1 qui tourne sur la plate-forme PLC1 dont le système d'exploitation SE1 est par exemple de type UNIX. En d'autres termes, dans ce cadre, AG1 est un agent S.N.M.P. permettant d'exécuter sur une plate-forme UNIX, des scripts SC prédéfinis pour le compte d'une application qui tourne sur PL, à savoir le gestionnaire GE.

L'application GE contrôle l'exécution des scripts qu'elle a lancé sur PLC1 en manipulant des objets et leurs attributs.

A ce stade, il est utile de rappeler les définitions suivantes, ce qui facilitera la compréhension de l'invention.

Un objet est constitué par tout élément matériel, logiciel, ou hybride (à la fois matériel et logiciel) d'un système informatique.

Une classe d'objets est un ensemble d'objets ayant un certain nombre de propriétés communes.

Un attribut est une propriété caractéristique d'un objet. Il a une valeur.

Une instance d'objet est un ensemble de valeurs d'attributs.

Ces objets spécifiques sont répartis en deux classes C1, C2, (une classe d'objet rassemble les objets ayant les mêmes propriétés) et sont décrits dans une M.I.B propre à AG1, contenue dans PLC1.

Ces deux classes dénommées respectivement *mrs* et *mrsLog* contiennent :
- des informations sur le script à exécuter, pour la première d'entre elles,
- la liste des scripts en cours d'exécution pour la seconde,

Pour faciliter la compréhension de l'invention, II est nécessaire de rappeler brièvement quelques caractéristiques essentielles du protocole S.N.M.P.

Ce dernier est un protocole de gestion (management protocol) des systèmes ouverts interconnectés sur un réseau de type "Internet" (réseau appelé IP, en abrégé). Ce protocole est, de fait, devenu un standard.

On dit qu'il est orienté objet. Cela signifie que les ressources gérées sont représentées par des objets dans une M.I.B.

Il est basé sur un modèle de gestion de type gestionnaire/agent (manager/agent, en anglais), ici GE/AG1.

### 2) LE PROCEDE SELON L'INVENTION :

Ainsi qu'il a été écrit plus haut, l'essence de l'invention consiste à suivre l'exécution de tout script en introduisant au-dessus de S.N.M.P., un protocole de contrôle qui s'appuie sur une notion de ticket, ce qui permet d'identifier le script SC en question. On associe donc un ticket d'identification TK à l'exécution de SC et on peut obtenir des informations sur celle-ci à tout moment. L'utilisation de TK est obligatoire.

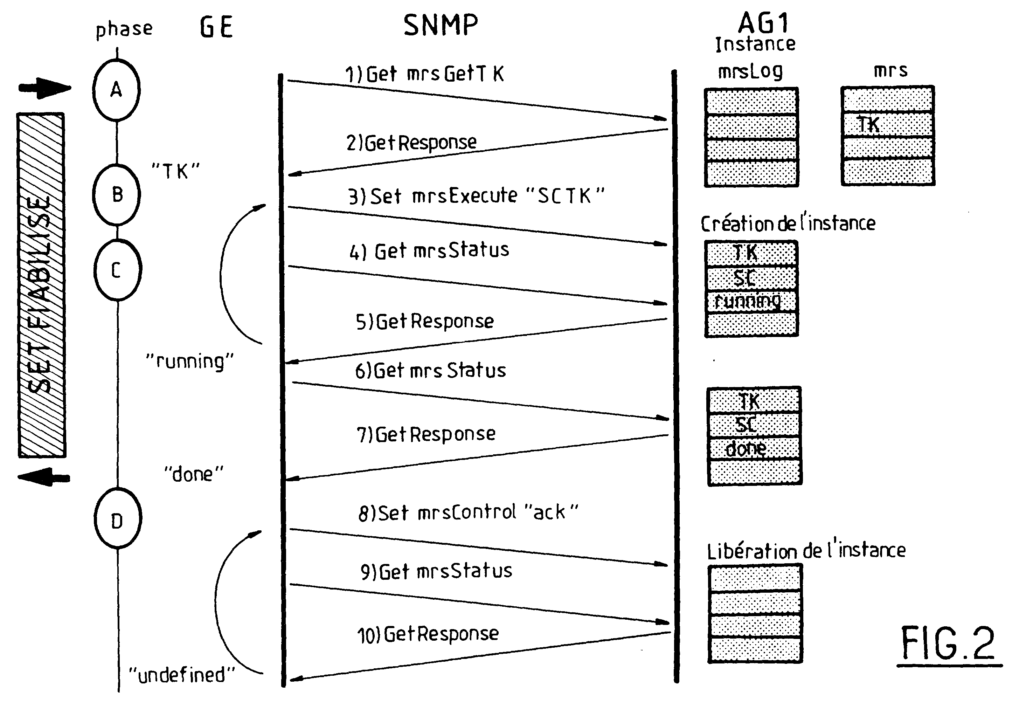

Le procédé de contrôle de l'exécution d'un script SC, selon l'invention, comprend les 4 phases essentielles suivantes A à D, illustrées par la figure 2. Celle-ci montre les échanges de données entre le gestionnaire GE et l'agent AG1, lors de ces différentes phases, le gestionnaire étant disposé sur la gauche de la figure alors que l'agent est à droite de celle-ci. On a également fait figurer, du côté de AG1, l'instance d'exécution du script et son contenu, au cours des phases A à D.

Ces phases sont représentées sur la gauche de la figure, du côté de GE. Elles sont chacune composées de sous-phases, l'ensemble de celles-ci étant numérotées de 1 à 10, respectivement de haut en bas de la figure 2, au milieu de cette dernière. Le nom des paquets de données échangées entre GE et AG1 est indiqué au milieu de la figure entre ces deux derniers, immédiatement à côté du numéro des sous-phases.

Ces phases et sous-phases sont donc les suivantes :

### Phase A) :

1) Le gestionnaire GE envoie à l'agent AG1 la demande d'obtention du ticket TK par l'intermédiaire d'une commande de type "get" dénommée *snmpget* sur un attribut appelé *mrsGetTicket.* Le paquet de données correspondant est Get *mrsGetTicket.*

2) Le ticket TK retourné par AG1 est constitué par une chaîne de caractères formée, d'une part, de l'identificateur de procédé PID (plus connu de l'homme du métier sous son vocable anglo-saxon de *process identifier,* en abrégé PID, particulièrement connu dans le monde UNIX) de AG1 et, d'autre part, d'un numéro d'ordre qui est incrémenté par cet agent chaque fois qu'il reçoit une demande de ticket. Le paquet de données renvoyé par AG1 à GE est alors GetResponse.

### Phase B) :

3) Le gestionnaire GE envoie alors à l'agent AG1 une commande d'exécution du script SC, par l'intermédiaire d'une commande *snmpset* sur un attribut appelé *mrsexecute.* Le ticket TK obtenu lors de la première phase est utilisé comme paramètre de cette commande. Le paquet de données est alors Set *mrsExecute"cmd* TK".

L'agent AG1 contrôle la validité du ticket TK et, en cas de réponse positive, crée une instance d'exécution de SC de la classe *mrsLog,* qu'il associe à TK, appartenant lui aussi à la même classe. Ceci est représenté à la figure 2 sur la partie droite de la figure où l'on a fait figurer les instances d'exécution du script SC, à savoir *mrsLog* et *mrs,* du même côté que AG1, ainsi que le contenu de celles-ci.

La syntaxe du script SC a la forme indiquée en annexe 1 où est donnée la suite des différents éléments le composant et leur signification.

### Phase C) :

4 à 7) Le script SC est lancé par AG1 avec les droits de l'utilisateur, lequel est ici le gestionnaire GE. Ceux-ci sont formés par le couple de valeurs *(uid, gid)* tels qu'ils sont définis dans la terminologie du monde UNIX.

II convient de préciser que AG1 n'exécute pas lui-même les scripts. En fait, il se contente de demander à PLC1 de le faire, ce que ce dernier accomplit réellement.

Tous les scripts sont exécutés en simultané (background, selon la terminologie anglo-saxonne) ce qui permet à AG1 de traiter en même temps d'autres demandes de type "get" ou "set". Dans ce cadre, il est toujours possible d'exécuter une action d'interruption sur un script en cours d'exécution par une commande *snmpset.*

A tout instant de l'exécution d'un script, des demandes d'informations peuvent être faites sur celle-ci, laquelle est définie par son instance d'exécution. Ces demandes sont faites par l'intermédiaire de commandes *snmpget* envoyées par GE à AG1. Ceci est illustré à la figure 2 par l'envoi par GE d'un premier paquet de données Get *mrsStatus* auquel correspond l'envoi par AG1 d'un premier paquet de données de réponses Get Response, respectivement aux sous-phases 4 et 5, ainsi que par l'envoi par GE à AG1 d'un second paquet de données Get *mrsStatus* et l'envoi par AG1 à GE du paquet de réponses correspondant Get Response, respectivement aux sous-phases 6 et 7.

Chaque instance contient un ensemble de valeurs d'attributs caractérisant l'exécution du script, notamment :
- la date de début d'exécution définie par l'attribut dénommé *mrsStartTime,*
- le ticket associé au script défini par l'attribut *mrsTicket,*
- un attribut de contrôle permettant d'agir sur le déroulement de l'exécution du script, désigné par *mrsControl,*
- un status d'exécution défini par l'attribut mrsStatus,
- un attribut de description de tout problème surgissant lors de l'exécution, indiquant la raison exacte de ce dernier, et désigné par *mrsProblemType,*
- les sorties standards du script (mrsStdOut, mrsStdErr) et les attributs de contrôle qui leur correspondent, à savoir *mrsStdOutMode, mrsStdOutStatus.*

Si l'instance du script n'existe pas, cela signifie que le script n'a pas été lancé.

Il convient de préciser que chacun des attributs mentionnés plus haut est créé dans le cadre de l'invention (attributs dont le nom commence par *mrs...).*

Le status d'exécution indique l'état dans lequel se trouve le script, l'ensemble de ses états définissant le diagramme d'état montré à la figure 2.

Les différents états possibles sont les suivants :
- l'état E1 dit "en cours d'exécution" (running, en anglais),
- l'état E2 dit "terminé sans erreur" (done, en anglais),
- l'état E3 dit "terminé avec une erreur" (failed, en anglais),
- l'état E4 dit "terminé sur commande de l'utilisateur" (killed, en anglais),
- l'état E5 dit "en attente d'exécution" (waiting, en anglais).

Lorsque AG1 donne à PLC1 l'ordre d'exécuter (ordre appelé "run" en anglais) le script, celui-ci passe dans l'état E1.

Si, à partir de E1, AG1 donne l'ordre de suspendre SC, ce dernier passe dans l'état E5. Il repassera à l'état E1 par un ordre d'exécution ("run")de la part de AG1.

A partir de E1, SC peut passer dans les états E2, E3, ou E4.

Si l'exécution de SC est terminée, il passe de l'état E1 à E2.

Si l'exécution est terminée avec une erreur, il passe de E1 à E3.

Si AG1 décide d'arrêter (ordre "kill" en anglais) l'exécution de SC, il passe dans l'état E4.

La confirmation de la terminaison d'un script SC peut être obtenue de deux manières différentes :
- soit synchrone, par lectures successives (polling, en anglais) du status du script
- soit asynchrone sur réception d'un événement de terminaison (voir plus loin).

### Phase D) :

8) Une action d'acquittement de l'exécution du script est faite pour libérer les ressources (mémoires, fichiers) associées à l'instance de ce dernier. Dans ce but, une commande *snmpset,* est envoyée sur l'attribut de contrôle de l'instance de script *(mrscontrol)* avec la valeur appropriée *(ack),* qui signifie "il faut acquitter". Le paquet d'informations correspondant est alors Set *mrscontrol"ack".*

9) Une fois l'acquittement pris en compte par l'agent AG1, il n'est plus possible d'accéder aux informations de cette instance. En effet, ce dernier libère l'instance d'exécution du script SC et celle-ci se trouve donc vide de toute information.

9 et 10) Dans ces conditions, si GE envoie un paquet d'informations Get *mrsStatus* à AG1, celui-ci lui renvoie un paquet de réponse Get Response lui indiquant que l'instance d'exécution est vide et que par suite, l'exécution du script est terminée.

### 3) LA DETECTION DES ERREURS :

Lorsqu'une erreur est détectée pendant l'exécution d'un script, le mécanisme d'exécution de ce dernier est interrompu. L'attribut de status *mrsStatus* est positionné à la valeur *failed* (voir plus haut), qui signifie "erreur". AG1 affecte à l'attribut de description du problème *mrsProblemType* une valeur qui permet d'établir l'origine de celui-ci, à savoir:
- *syntaxError,* qui signifie : erreur de syntaxe,
- *internalError,* qui signifie : erreurs internes de l'agent,
- *scriptfailure,* qui signifie : erreurs internes du script SC,
- *invalidUser,* qui signifie : accès par un utilisateur inconnu.

La sortie standard d'erreur *(mrsStdErr)* contient le message d'erreur retourné par le script SC. Dans ce cas, l'attribut *mrsProblemType* contient la valeur *scriptFailure.*

### 4) TERMINAISON DU SCRIPT :

### 1) Terminaison forcée :

II est possible de forcer la terminaison d'un script SC en lançant par l'intermédiaire de GE une commande *snmpset* sur l'attribut *mrsControl* de contrôle de l'instance de SC, lequel prend la valeur appropriée *kill* qui signifie "arrêter". L'agent AG1 interrompt alors brutalement l'exécution de SC et le status de script *mrsStatus* est positionné à la valeur *killed* qui signifie : "interrompu".

### 2) Evénement de terminaison :

La terminaison d'un script est signalée par l'émission par AG1 d'un événement appelé *snmpTrap* tel que prévu dans le protocole S.N.M.P. Deux types d'événements sont utilisés :
- l'un signalant la terminaison sans erreur du script. Un attribut appelé *mrsTrapDoneMode* de l'instance d'exécution permet d'activer ce mécanisme, en ayant la valeur *on* qui signifie "activation", ou de le désactiver, en ayant la valeur *off* qui signifie "desactivation". Par défaut, sa valeur est *off*
- l'autre signale que le script a échoué *(mrsFailed).*

Ce processus de terminaison est tout-à-fait conforme au protocole S.N.M.P.

### 5) SUSPENSION D'EXECUTION DU SCRIPT :

GE peut suspendre l'exécution d'un script par une commande *snmpset* sur l'attribut de contrôle *mrscontrol* avec la valeur *(suspend)* et la réactiver par la valeur *(run).*

### 6) RECUPERATION DES SORTIES STANDARDS :

Les sorties standards des scripts (appelées *stdout* et *stderr,* dans le monde UNIX) sont renvoyées vers des fichiers temporaires identifiables par le ticket TK (par exemple fichiers appelés *ticket.stderr* et *ticket stdout).*

Ces informations sont disponibles tant que l'instance d'exécution du script n'a pas été acquittée par GE *(ack).*

Ces informations de sortie sont lues par un mécanisme de lecture page par page , lesquelles contiennent un nombre entier de lignes et sont accédées séquentiellement par des commandes de lectures successives *(snmpget)* sur l'attribut *mrsStdOut* de l'instance d'exécution.

L'état de la page courante de la sortie standard est indiquée par l'attribut *mrsStdOutState.* Il peut prendre les valeurs données en annexe 2.

### Annexe 1

Voici la description sous forme BNF (norme Backus Naur Format) de la grammaire des interfaces de scripts:

Les symboles terminaux sont indiqués entre quotes simples.

Par exemple : 'xyz' denote la chaine de caractères xyz dans le fichier. Les symboles terminaux peuvent aussi contenir des expressions regulières.

Les autres symboles sont des symboles non terminaux.

Les alternatives sont dénotées par un | et regroupées par des accolades ex:{A E|B} dénotées soit A et E soit B.

Les parties optionnelles sont indiquées entre crochets.

Par exemple : [C] dénote que C est optionnel.

Les annotations entre parenthèses sont des commentaires sur la grammaire.

>>>> DEBUT DE LA BNF:

SCRIPT := HEADER PARAMS

COMMENT := '#.*\n' (commentaires à la shell)

HEADER := SCRIPT_TITLE {SCRIPT_HELP SCRIPT_EXEC | SCRIPT_EXEC SCRIPT_HELP }

(on peut mettre le HELP avant ou après le nom de l'exécutable)

PARAMS := { PARAMS PARAM | PARAM }

SCRIPT_TITLE := 'title' '=' STRING (si on veut utiliser ce titre dans la fenêtre principale pour choisir le script, il faut peut-être limiter sa taille)

SCRIPT_HELP := 'help' '=' STRING

SCRIPT_EXEC := 'script' '=' FILENAME (cette ligne pourrait être optionnelle; dans ce cas on utiliserait le même nom que le fichier d'interface)

FILENAME := ID (Il faut peut-être autoriser plus que ID comme nom de fichier)

PARAM := 'param' ID '=' PARAM_PROMPT PARAM_HELP PARAM_TYPE

PARAM_PROMPT := STRING (le PROMPT du paramètre)

PARAM_HELP := STRING (le HELP du paramètre)

PARAM_TYPE := { ENTRY | TEXTLIST | OPTION | RADIO | PASSWD SELECTION | SLIST | MLIST | INTEGER | INDIRECT)

(ligne de texte simple:)

ENTRY :='text' ENTRY_WIDTH [ ENTRY_DEFAULT_VALUE ]

ENTRY_WIDTH := NUMBER (la longueur de la ligne de texte.)

ENTRY_DEFAULT_VALUE := '(' STRING ')' (valeur qui sera initialement affichée pour le paramètre. Par défaut, c'est une chaîne vide.)

(ligne de texte passwd affichant des * à la place des caractères:)

PASSWD:= 'passwd'

(ligne de texte n'acceptant que des chiffres:)

INTEGER:= 'integer' [ INTEGER_DEFAULT_VALUE ]

INTEGER_DEFAULT_VALUE := '(' NUMBER ')' (valeur qui sera initialement affichée pour le paramètre. Par défaut, c'est 0.)

(texte à plusieurs lignes:)

TEXTLIST := 'textlist' ROW_COL [ TEXTLIST_DEFAULT_VALUE ]

ROW_COL := NUMBER 'x' NUMBER (nombre de lignes x nombre de colonnes du texte, tout collé)

TEXTLIST_DEFAULT_VALUE := '(' STRING_LIST ')' (liste de chaines qui seront affichées initialement, une par ligne. Par défaut, rien n'est affiché.) (choix booléen (toggle button):)

OPTION :='option' INIT_OPTION

INIT_OPTION := '(' {'false' | 'true'} ')' (La valeur par defaut du toggle button:

true<->enclenché)

(choix unique par Radio Buttons:)

RADIO := 'radio' '('PROMPT_VAL_LIST ')'

PROMPT_VAL_LIST := { PROMPT_VAL_LIST ',' PROMPT_VAL | PROMPT_VAL } (liste de prompt_val séparés par des virgules)

PROMPT_VAL := '(' PROMPT ',' VAL [ ',' 'default'] ')' (Pour chaque prompt_val, on crée un radio button ayant pour prompt PROMPT et qui renverra la valeur VAL s'il est sélectionné. La partie optionnelle permet de donner le bouton sélectionné initialement dans la liste de boutons. S'il n'y a pas de défaut donné, le premier est choisi. Si plusieurs défauts sont donnés, un warning est envoyé et le dernier défaut donné dans la liste est choisi.)

(choix unique par Option Menu: )

SELECTION :='selection' SELECTION_LIST

(choix par liste à sélection unique:)

SLIST := 'slist' SELECTION_LIST

(choix par liste à sélection multiple:)

MLIST := 'mlist' SELECTION_LIST

SELECTION_LIST := '(' STRING_LIST ')' (liste de chaînes parmi lesquelles le choix va s'effectuer)

(paramètres a sélection indirecte dynamique:)

INDIRECT := 'indirect' { INDIRECT_LOCAL | INDIRECT_SNMP | INDIRECT_SQL}

INDIRECT_LOCAL :='local' INDIRECT_LOCAL_CMD

INDIRECT_LOCAL_CMD := '(' CMD [ARGS]')' (commande et liste des paramètres de la commande qui sera appelée en local pour construire la liste des choix possibles. La commande doit écrire les choix sur stdout, un choix par ligne.)

CMD := STRING

ARGS := { STRING | ARGS STRING }

INDIRECT_SNMP := 'snmp' INDIRECT_SNMP_CMD

INDIRECT_SNMP_CMD := '(' [ SNMP_CLASS_INSTANCES ] SNMP_CLASS')'

SNMP_CLASS := ID

SNMP_INSTANCE := STRING

SNMP_CLASS_INSTANCE := '(' SNMP_CLASS SNMP_INSTANCE')'

SNMP_CLASS_INSTANCES := { SNMP_CLASS_INSTANCE | SNMP_CLASS_INSTANCES SNMP_CLASS_INSTANCE }

INDIRECT_SQL := 'sql"('INDIRECT_SQL_CMD')'

INDIRECT_SQL_CMD := SQL_CONNECTID SQL_TABLES SQL_ATTRIBUTES [ SQL_CONDITIONS ]

SQL_CONNECTID := STRING (a la sml)

SQL_TABLES := '('ID_LIST')'

SQL_ATTRIBUTES := '(' ID_LIST')'

SQL_CONDITIONS := '(' SQL_CONDITION [ { 'and' | 'or' } SQL_CONDITIONS] ')'

SQL_CONDITION := SQL_CONDITIONS | STRING (à revoir: une SQL_CONDITION doit être parsée, ce ne peut pas être une STRING)

ID_LIST := { ID | ID_LIST ID}

STRING_LIST := { STRING | STRING_LIST ',' STRING}

STRING := '''[^"]*''' (chaîne de caractères quelconques entre double quotes. Peut être sur plusieurs lignes. Pour l'instant, ne reconnait pas les caractères spéciaux comme \n ou \t.)

ID := '[a-zA-Z][a-zA-Z0-9_]*' (Identificateurs (<-> nom de variables))

NUMBER := '[1-9][0-9]*' (nombre entier)

<<<< FIN DE LA BNF

On peut rajouter des types, par exemple FREE_INTEGER qui serait une ligne de texte qui n'accepte que des entiers ou BOUND_INTEGER qui serait une XmScale ...

### Annexe 2

L'état de la page courante de la sortie standard est indiquée par l'attribut *mrsStdOutState.* Il peut prendre les valeurs suivantes :
- *première page (top) :* pour la première page,
- *dernière page (bottom) :* pour la dernière page,
- *page quelconque (any) :* pour une page quelconque située entre la première et la dernière page.
- *page unique (all)* : si le message tient sur une seule page,
- *dépassement (overflow) :* la page demandée est en dehors des limites autorisées,
- *vide (empty):* pas de page.

Les pages sont identifiées par un numéro de page. Ce numéro est retourné par l'attribut *mrsStdOutNbPage.*

## Revendications

1. Procédé de contrôle de la prise en compte d'une demande d'exécution d'un scénario de commande (script) à travers un protocole non garanti en mode non-connecté (par exemple de type S.N.M.P.), dans un système informatique (SI) comprenant une pluralité de plates-formes (PL, PLC1, PLC2, etc.) hétérogènes reliées par un réseau (RE) supportant ce protocole, dont l'une dite plate-forme de commande (PL) comprend un gestionnaire (GE) et les autres comprennent des agents (AG1, AG2, etc.) d'exécution des commandes, est caractérisé en ce qu'il est composé des phases suivantes :
A) le gestionnaire (GE) envoie d'abord à l'agent (AG1) de la plate-forme (PLC1) chargée d'exécuter la commande, une demande (Get *mrsGetTK)* de ticket d'identification par l'intermédiaire d'une commande de type "get", et l'agent (AG1) retourne (GetResponse) un ticket d'identification (TK) au gestionnaire,
B) Le gestionnaire envoie ensuite la demande d'exécution de la commande (Set *mrsExecute"cmd* TK") à l'agent par l'intermédiaire d'une commande de type "set", dont le dit ticket est un paramètre, puis l'agent contrôle la validité de ce dernier et crée une instance d'exécution de la commande, qu'il associe au ticket (TK).
C) Le gestionnaire s'assure de la bonne réception de la demande en scrutant la dite instance (Get *mrsStatus)* par l'intermédiaire de l'agent et, avec le ticket, peut suivre l'évolution de l'exécution de la demande.

2. Procédé de contrôle selon la revendication 1 caractérisé en ce que le protocole étant de type S.N.M.P., et les demandes d'exécution étant de type *snmpset* pour exécuter des scripts, les dites phases A à C ont les particularités suivantes :
A) la demande de ticket par le gestionnaire (GE) est faite par l'intermédiaire d'une commande *snmpget,* et l'agent retourne le ticket au gestionnaire,
B) la demande d'exécution du script faite par le gestionnaire (GE) à l'agent (AG1) l'est par l'intermédiaire d'une commande *snmpset,* pour laquelle le dit ticket est un paramètre,
C) le gestionnaire effectue cette phase par le moyen de commandes *snmpget,*
et en ce qu'il comprend également la quatrième phase suivante :
D) Dès que l'exécution du script est terminée, le gestionnaire effectue une opération d'acquittement de celle-ci, en envoyant à l'agent une commande (Set *mrscontrol "ack")* de type "set" avec une valeur d'acquittement appropriée.
